# EUROPÄISCHE PATENTANMELDUNG

(11) **EP 4 046 763 A1**
(43) Veröffentlichungstag der Anmeldung: **24.08.2022**
(21) Anmeldenummer: 21158541.9
(22) Anmeldetag: 22.02.2021
(51) Int. Cl.: B25J 19/00

(54) **LEITUNGSFÜHRUNGSVORRICHTUNG ZUR FÜHRUNG WENIGSTENS EINES LEITUNGSPAKETS ODER EINER LEITUNG AN EINEM ROBOTER**

(71) Anmelder: BECKER GmbH, 48249 Dülmen (DE)
(72) Erfinder: LANGENKÄMPER, Heinz, 45721 Haltern am See (DE); BROEKHUIJSEN, Andries, 48249 Dülmen (DE)
(74) Vertreter: Tarvenkorn, Oliver

(57) **Zusammenfassung**

Leitungsführungsvorrichtung (100) zur Führung wenigstens eines Leitungspakets und/oder einer Leitung an einem Roboter, mit wenigstens:
- einem Gehäuse;
- einer Befestigungsschelle (16), an der das Leitungspaket in einer Längsrichtung festgelegt ist;
- einer Führungsschelle (18), innerhalb der das Leitungspaket gleitend geführt ist,
- einer mit der Befestigungsschelle (16) verbundenen Rückzugseinrichtung (30) zur Ausübung einer Rückzugskraft auf einen durch die Führungsschelle (18) hindurchgeführten Abschnitt des Leitungspakets (210),
wobei die Rückzugseinrichtung (30) wenigstens umfasst:
- einen Schlitten (31), der auf einer Führungsschiene (34) verschiebbar gelagert ist und
- ein elastisches Rückzugselement (27), das zwischen dem beweglichen Schlitten (31) und dem Gehäuse (20) spannbar ist.

dadurch gekennzeichnet,
- dass das Gehäuse (20) wenigstens zwei Längsträgerelemente (21, 22) umfasst, die sich parallel zur Linearführung (32) erstrecken und die jeweils wenigstens eine, sich in Längsrichtung erstreckende Verstellnut (21.1 21.2) aufweisen,
- dass die Rückzugseinrichtung (30) über Befestigungselemente, die jeweils in einer der Verstellnuten (21.1, 21.2) geführt sind, mit den Längsträgerelementen (21, 22) verbunden ist.

## Beschreibung

Die Erfindung betrifft eine Leitungsführungsvorrichtung zur Führung wenigstens eines Leitungspakets oder einer Leitung an einem Roboter mit den Merkmalen des Oberbegriffs des Anspruchs 1.

Bei mehrachsigen Gelenkarm-Industrierobotern werden dem vom Roboter geführten Werkzeug, das am Flansch der Roboterachse J6 befestigt ist und wobei es sich beispielsweise um einen Greifer, eine Schweißzange oder eine Stanznietzange handelt, ein oder mehrere Einzelleitungen zur Versorgung des Werkzeugs, zugeführt. Die Einzelleitungen sind üblicherweise elektrische Versorgungskabel, elektrische Steuerkabel, Spezialdatenkabel sowie Medienzuführungen für Gase (auch Luft) oder Flüssigkeiten. Diese Einzelleitungen werden in einem so genannten Leitungspaket zusammengelegt und üblicherweise in einem schlauchförmigen Schutzmantel gehalten. Ein solches Leitungspaket ist zum einen wegen der Relativbewegungen der Roboter-Gelenkarme zueinander sowie wegen möglichen widrigen Umgebungsbedingungen wie aggressive Medien bei einem Waschroboter, Schweißspritzer oder UV-Strahlung bei einem Schweißroboter, etc. hohen dynamischen, mechanischen und chemischen Belastungen ausgesetzt.

Um eine zuverlässige Führung eines Leitungspaketes oder einer Leitung zu ermöglichen wird üblicherweise eine Vorrichtung zur Leitungspaketführung eingesetzt, welche in der Form beschaffen ist, dass ein axialer Längenausgleich des Leitungspaketes oder einer Leitung zwischen der Roboter-Schwinge und der Roboterachse J6 bei einer Relativbewegung zwischen mehreren Roboter-Gelenkarmen möglich ist. Der axiale Längenausgleich der Vorrichtung zur Leitungspaketführung muss einerseits nachgebend sein in der Form, dass vorgesehene vorhandene Zusatzlänge des Roboter-Leitungspaketes durch Bewegung der Roboter-Gelenkarme herausgezogen werden kann. Andererseits muss die Vorrichtung zur Leitungspaketführung eine ständige Rückzugskraft auf Leitungspaket(e) oder Leitung(en) ausüben in der Form, dass eine vorher durch den Gelenkarmroboter herausgezogene Ausgleichslänge beim Zurückfahren der Roboter-Gelenkarme durch die ständig wirkende Rückzugskraft automatisch wieder zurückgezogen wird.

Eine solche Vorrichtung ist beispielsweise der EP 1 848 571 B1 zu entnehmen. Um mittels einer Vorrichtung zur Führung eines Leitungspaketes oder mehreren Leitungspaketen oder einer Leitung oder mehreren Einzelleitungen an einem Gelenkarmroboter eine passende Rückzugskraft auf Leitungspaket(e) oder Einzelleitung(en) auszuüben, ist als Bestandteil dieser Vorrichtung eine Rückzugseinrichtung zur Ausübung einer für Leitungspaket(e) oder Leitung(en) geeigneten, ständig wirkenden, Rückzugskraft vorgesehen. Diese umfasst eine Linearführung sowie einen daran verschiebbar angeordneten Schlitten. Auf den Schlitten wirkt eine Rückzugskraft, die dem Schlitten, nachdem externe durch den Roboter mittels Bewegung seiner Gelenkarme verursachte Kräfte eine Verschiebung des Schlittens auf die feststehende Führungsschiene verursacht haben, immer wieder in seiner Ausgangsposition zurückbringt. Die Rückzugskraft auf dem Schlitten wird durch ein elastisches Element wie eine Spiralfeder erzeugt.

Wichtig für die Platzierung auf einem Gelenkarmroboter ist, dass die Vorrichtung zur Leitungspaketführung auf einem Roboter möglichst klein ist und ein geringes Gewicht aufweist, da die Vorrichtung mit seinem Gewicht den Roboter zusätzlich statisch und dynamisch belastet.

Eine ausreichend hohe Rückzugskraft ist erforderlich, um ein sicheres Zurückholen des Leitungspaketes zu gewährleisten. Das wird umgesetzt mittels der Federkraft der Spiralfeder. Spiralfedern unterliegen dem Gesetz nach Robert HOOKE, das die Verformung von Festkörpern im elastischen Bereich beschreibt. Die Verformung im elastischen Bereich wirkt proportional zur einwirkenden Belastung, das heißt, solange die Elastizitätsgrenze nicht überschritten wird, verhält sich die Verformung im Vergleich zur Belastung linear. Dieses Prinzip wird in der Rückzugseinrichtung der Vorrichtung zur Leitungspaketführung angewandt. Das heißt, dass die Kraft der Rückzugseinrichtung am Anfang des Weges vom Auszugstrajekt relativ gering und am Ende des Weges vom Auszugstrajektes relativ groß ist. Es betrifft ein gewünschter Effekt: die Rückzugskraft ist am höchsten bei maximal ausgefahrener Position des verschiebbar angeordneten Schlittens der Rückzugseinrichtung. Umgekehrt ist die Rückstellkraft relativ gering bei komplett eingefahrenem Schlitten der Rückzugseinrichtung am Anfang des Auszugstrajektes. Das bedeutet, dass die Belastung auf Leitungspaket(e) oder Leitung(en) nur dort hoch ist, wo der Rückzug des Leitungspaketes am wichtigsten ist. Je weiter das Leitungspaket von der Roboterachse J6 zurückgezogen sind, je weniger wichtig wird die Rückzugsfunktion, gleichzeitig wird die Summe der Zugbelastungen insgesamt auf das Leitungspaket sowie die dort enthaltenen Leitungen geringer, was der Lebensdauer der Teile insgesamt zu Gute kommt.

Eine weitere Leitungsführungsvorrichtung ist aus EP 3112098 A1 bekannt. Diese besitzt eine verschmutzungsanfällige, kugelgelagerte Linearführung. Alle Bauteile sind auf einer festen Basisplatte aufgebaut, die mit verschiedenen Lochbildern an den jeweiligen Robotertyp, auf dem die Leitungsführungsvorrichtung montiert werden soll, angepasst werden muss. Die Spannkraft kann nur durch Austausch der Rückholfedern verändert werden. Eine Feinjustierung der Spannkraft ist nicht möglich und auch für die Stellung der Führungsschelle ist keine Anpassung möglich.

Ausgehend davon hat die Erfindung das Ziel, eine verbesserte Leitungsführungsvorrichtung anzugeben, die auch in rauen Arbeitsumgebungen zuverlässig die Rückholung wenigstens eines Leitungspakets gewährleistet. Außerdem soll eine Verstellbarkeit der Lage der Rückzugseinrichtung in Bezug auf die Längsachse des geführten Leitungspaketabschnitts und/oder eine einfache Anpassung der Rückzugskraft ermöglicht werden.

Diese Aufgaben werden erfindungsgemäß durch eine Leitungsführungsvorrichtung mit den Merkmalen des Anspruchs 1 gelöst.

Die Erfindung wird im Folgenden jeweils beispielhaft unter Bezug auf ein einzelnes Leitungspaket beschrieben, worunter auch ein Bündel mehrerer Leitungen, die in einem Schutzschlauch geführt sind, zu verstehen ist. Die erfindungsgemäße Leitungsführungsvorrichtung eignet sich aber gleichermaßen auch für Einzelleitungen, mehrere parallel geführte Einzelleitungen oder mehrere parallel geführte Leitungspakete. Je nach Art und Anzahl der Leitungen und/oder Leitungspakete sind Art und Anzahl der Schellen zu wählen, mit denen die Leitungen und/oder Leitungspakete in der Leitungsführungsvorrichtung gehalten und/oder geführt werden.

Die Leitungsführungsvorrichtung weist eine Rückzugseinrichtung zur Ausübung einer mit dem Verfahrweg veränderlichen Rückzugskraft auf Leitungspaket(e) oder Leitung(en) aus. Die Rückzugseinrichtung beinhaltet dabei eine feststehende Führungsschiene mit vorzugsweise beidseitig V-förmig ausgebildeten Führungsflächen und einen Schlitten, ausgerüstet mit kugelgelagerten Rollen mit V-förmig ausgebildeten Aufnahmerillen, der an der Führungsschiene zwischen einer Anfangs- und einer Endposition stufenlos zu verfahren ist. Auf dem Schlitten ist wenigstens eine Befestigungsschelle zur axialen Festlegung des Leitungspakets angebracht. Weiterhin ist zwischen dem Schlitten und der feststehenden Führungsschiene ein elastisches Element, vorzugsweise eine Spiralfeder, als Zug- oder Druckfeder angeordnet, was eine stetige, aber variable Rückzugskraft auf dem Schlitten ausübt.

Der Schlitten als gleitendes Element übt mittels der Spiralfedern auf die Befestigungsschelle, und darüber auf das darin gehaltene Leitungspaket, eine stetige, aber variable Rückzugskraft aus und führt damit das Leitungspaket entlang einer fest vorgegebenen Bahn am Roboter.

Aufgrund der Eigenschaften des elastischen Elementes als Spiralfeder ist die Rückzugskraft am größten am Ende des Weges vom Schlitten entlang der feststehenden Führungsschiene in Richtung der Roboterachse J6. Das hat den Vorteil, dass die Rückzugskraft auf Leitungspaket(e) oder Leitung(en) in der Position am Roboter am größten ist, in der es am wichtigsten ist, dass Leitungspaket(e) oder Leitung(en) gestrafft werden. Die Rückzugskraft wird über den gesamten Rückweg des Schlittens entlang der feststehenden Führungsschiene stetig geringer und ist am geringsten an der Stelle, an der der Schlitten in seine von der Roboterachse J6 abgewandte Ausgangsposition zurückgekehrt ist. Dieser Effekt der geringeren Zugkraft auf Leitungspaket(e) oder Leitung(en) vergrößert die Lebensdauer gegenüber solchen Varianten, bei denen insgesamt eine größere Zugkraft auf Leitungen ausgeübt wird. Die Härte der Spiralfeder kann entsprechend ausgewählt werden. Die Gesamt-Rückzugskraft, die auf den Schlitten wirkt, liegt dabei - je nach Masse der geführten Abschnitte des Leitungspaket(e) oder der Leitung(en) - bevorzugt im Bereich von maximal 150N.

Die Spiralfeder, vorzugsweise aus Federstahl, auch Edelstahlvarianten sind denkbar, übt als elastisches Element die variable Rückzugskraft aus. Die Rückzugskraft verändert sich von seinem maximalen zu seinem minimalen Wert linear, vorgegeben durch die Eigenschaften von Spiralfedern, beschrieben durch das Hookeschen Gesetz, und ist ein gewünschter Effekt entlang der vorgegebenen Bahn des Schlittens und eine wesentliche Eigenschaft der erfindungsgemäßen Leitungsführungsvorrichtung.

Die feststehende Führungsschiene ist bevorzugt als metallenes Element gebildet, mit beidseitigen Laufflächen für kugelgelagerte Rollen, die an den Laufflächen entlang rollen. Die beidseitigen Laufflächen der Führungsschiene sind bevorzugt V-förmig, so dass Schmutz und Staub automatisch herunterfallen. Die Laufflächen der Führungsschiene sind außerdem gehärtet zwecks Erhöhung der Lebensdauer. Die derartige Gestaltung der feststehenden Führungsschiene, zusammen mit der Gestaltung der kugelgelagerten Rollen mit ihrer an die Führungsschiene angepasste V-förmige Aufnahme garantiert, u.a. durch ihrer Schmutzunempfindlichkeit und gehärtete Laufflächen, eine wartungsfreie Lebensdauer über viele Jahre hinweg, vorzugsweise über die gesamte Einsatzdauer des Industrieroboters in einer Fertigungsanlage, beispielsweise in der Automobilindustrie für die Fertigung eines KFZ-Modells über eine Zeitraum von sechs bis acht Jahren.

Der Schlitten als verschiebbares Element auf der feststehenden Führungsschiene ist mit mindestens drei, vorzugsweise vier, kugelgelagerten Rollen ausgerüstet. Die Rollen haben seitlich ein umgekehrtes V-Profil als Lauffläche und sind spiegelbildlich ausgebildet zur Lauffläche der feststehenden Führungsschiene. Die Lauffläche der Rollen ist ebenfalls gehärtet und durch Form und Härte der Laufflächen wartungsfrei während der gesamten Lebensdauer.

Die Rückzugseinrichtung der erfindungsgemäßen Vorrichtung ist vorzugsweise mit zwei Spiralfedern ausgerüstet. Die insgesamt erforderliche Rückzugskraft wird von beiden installierten Spiralfedern gemeinsam erzeugt. Die Verteilung der Rückzugskraft auf zwei Spiralfedern hat den Vorteil, dass die einzelnen Federn für sich kleiner sein können, dass ein sicherer Betrieb gewährleitet wird und dass die Rückzugskraft auf den Schlitten übertragen wird, ohne ein Drehmoment auf ihn auszuüben.

Der Schlitten kann sich an der feststehenden Führungsschiene in Längsrichtung X zwischen zwei Endpunkten bewegen. Für die reibungsarme Führung ist der Schlitten mit drei oder insbesondere vier kugelgelagerten Rollen ausgerüstet.

Zur Endlagendämpfung des Schlittens in beiden Endpunkten seiner maximalen Wegstrecke ist jeweils ein elastisches Endlagenpufferelement vorgesehen.

Die erfindungsgemäße Leitungsführungsvorrichtung ist zwischen zwei Längsträgerelementen aufgebaut, die bevorzugt aus Aluminiumprofilen gebildet sind. Diese haben in Längsrichtung an mindestens drei Seiten eine Verstellnut, die sich vorzugsweise über die gesamte Länge erstrecken. Mit Hilfe der Verstellnuten ist es sehr leicht, mit Nutmuttern und Schrauben in Längsrichtung stufenlos einstellbare Befestigungspunkte zu setzen.

Die feststehende Führungsschiene wird bevorzugt mit Hilfe von Querlaschen und Gewindeschrauben zwischen den Längsträgerelementen befestigt. An den Querlaschen sind bevorzugt zusätzliche Endlagenpufferelemente angeordnet.

Für die Befestigung an den jeweiligen unterschiedlichen Robotern dienen Befestigungsbügelelemente in U- oder L-Form oder in flacher Form, die mittels Schrauben fest mit dem Roboter verbunden werden. Die erfindungsgemäße Leitungsführungsvorrichtung ist über die Befestigungsbügelelemente und mit Hilfe von Nutmuttern in den Verstellnuten der Längsträgerelementen am Roboter in Längsrichtung stufenlos positionierbar.

Vorn auf der erfindungsgemäßen Leitungsführungsvorrichtung, also der Roboterachse J6 zugewandt, ist wenigstens eine ortsfeste Leitungspaket-Schelle befestigt, die als Führungsschelle ausgebildet ist. Diese Schelle führt das wenigstens eine Leitungspaket, und zwar in der Form, dass das Leitungspaket hindurch gleiten können.

Die Verbindung des Leitungspakets mit der erfindungsgemäßen Leitungsführungsvorrichtung geschieht über die Leitungspaketschellen auf der Vorrichtung. Eine Befestigungsschelle ist mit dem verfahrbaren Schlitten der erfindungsgemäßen Vorrichtung verbunden. Dort ist das Leitungspaket so befestigt, dass eine Zugkraft auf das Leitungspaket den Schlitten auslenkt.

Das Gehäuse der erfindungsgemäßen Vorrichtung enthält eine schlitzförmige Öffnung, durch welche hindurch der Schlittenbügel mit dem Schlitten verbunden ist. Hierdurch wird eine zuverlässige Führung des Leitungspaketes erzielt.

Die Befestigungsschelle des Leitungspaketes auf dem Schlitten ist mit einem Adapter als Abstandhalter versehen, der insbesondere als U-förmiger Bügel ausgebildet und mit mehr als zwei, insbesondere mit vier oder sechs Befestigungsschrauben, mit dem Schlitten verbunden ist. Der Schlitten hat entsprechende Verbindungsbohrungen für die Befestigung. Die Verbindung ist durch die mehr als zwei Verbindungspunkte derart gestaltet, dass sie jegliche Kippmomente, die möglicherweise durch das oder die Leitungspakete über die Schelle auf dem Schlitten wirken, aufnehmen kann.

Die erfindungsgemäße Leitungsführungsvorrichtung wird an beiden Seiten durch die Längsträgerelemente eingefasst, wobei an einer Seite das Längsträgerelement länger ist, um eine zuverlässige Führung des Leitungspaketes oder der Leitungspakete am Roboter hinter der erfindungsgemäßen Vorrichtung zu gewährleisten. Aus sicherheitstechnischen Gründen sind die beweglichen Teile der erfindungsgemäßen Leitungsführungsvorrichtung oberhalb und unterhalb der beiden Längsträgerelemente jeweils mit einer flächigen Abdeckung versehen.

Eine Befestigung der Leitungsführungsvorrichtung auf dem Roboter erfolgt vorzugsweise über wenigstens zwei längs verstellbare Befestigungsbügelelemente, so dass auf dem Roboter keine separate Bodenplatte zur Befestigung erforderlich ist. Die Leitungsführungsvorrichtung kann in ihrer Lage auf dem Roboter verändert werden, indem sie in Längsrichtung des Leitungspakets verschoben wird. Dazu brauchen die Befestigungsschrauben der Befestigungsbügelelemente nur gelockert zu werden. Das Gehäuse der Leitungsführungsvorrichtung wird dann relativ zu den fest am Roboter angebrachten Befestigungsbügelelemente entlang der Befestigungsnuten verschoben und die Verschraubungen werden wieder angezogen.

Nach der Erfindung kann die Vorspannung der Spiralfedern als elastische Elemente zum Zurückziehen des Schlittens in die Endposition, die von der Roboterachse J6 abgewandt ist, in verschiedener Weise geändert werden:
Vorzugsweise ist die Rückzugseinrichtung relativ zum Gehäuse und/oder das mit dem Gehäuse verbundene Widerlagerelement relativ zu demjenigen Teil der Rückzugseinrichtung, die die Führungsschiene enthält, verschiebbar. Das wird durch die Lagerung des Widerlagerelements und der Führungsschiene in den Verstellnuten in den Längsträgerelementen ermöglicht. Indem der Abstand verändert wird, wird die Länge der Rückzugselemente und somit deren Vorspannung verändert.

Außerdem kann vorgesehen sein, an wenigstens einem der endseitigen Aufhängepunkte der Spiralfedern eine Längenverstellung zu ermöglichen. Die Fixierpunkte sind hierbei mit Hilfe von Ösen und Gewinde in axialer Richtung einstellbar, damit die Vorspannung der Spiralfedern eingestellt werden kann und die jeweilige Rückzugskraft einstellbar ist.

Des Weiteren können Spiralfedern in unterschiedlicher Stärke zur Anwendung kommen. Durch das leichte Einhaken der Spiralfedern mit Hilfe der Ösen an den Fixierpunkten der Spiralfeder können die Spiralfedern auch vor Ort am Roboter noch gewechselt werden. Für leichte Leitungspakete wie Handlingpakete reicht eine verhältnismäßig leichte Rückzugskraft und damit eine oder zwei leichte Feder(n) als Rückzugselement(e) aus. Für schwere Leitungspakete wie Schweißpakete werden in der Regel größere Rückzugskräfte gebraucht und es werden schwerere Spiralfedern eingesetzt.

Die erfindungsgemäße Vorrichtung wird nachfolgend mit weiteren vorteilhaften Ausgestaltungen und anhand der in den Zeichnungen dargestellten Ausführungsbeispiele näher erläutert. In den Figuren sind gleichwirkende Teile mit den gleichen Bezugszeichen versehen. Die Figuren zeigen jeweils in einer perspektivischen Darstellung, soweit nicht anders angegeben:
- Fig. 1: einen Roboter mit einer Leitungsführungsvorrichtung in einer ersten Stellung;
- Fig. 2: den Roboter in einer zweiten Stellung;
- Fig. 3: die Leitungsführungsvorrichtung in der Stellung gemäß Figur 2, von der Rückseite des Roboters her gesehen,
- Fig. 4: die Leitungsführungsvorrichtung von schräg oben;
- Fig. 5A: eine Rückzugseinrichtung von schräg oben;
- Fig. 5B: die Rückzugseinrichtung in Draufsicht von oben;
- Fig. 5C: die Rückzugseinrichtung im Schnitt durch Führungsschiene und Schlitten;
- Fig. 6: die geöffnete Leitungsführungsvorrichtung von schräg oben;
- Fig. 7: die geöffnete Leitungsführungsvorrichtung von schräg unten;
- Fig. 8: die Leitungsführungsvorrichtung auf einer schwenkbaren Basiseinheit;
- Fig. 9: eine seitlich an einem Roboter angebrachte Leitungsführungsvorrichtung.
- Fig. 10: einen Roboter mit einer Leitungsführungsvorrichtung für mehrere Leitungspakete, und
- Fig. 11: die Leitungsführungsvorrichtung für mehrere Leitungspakete einzeln.

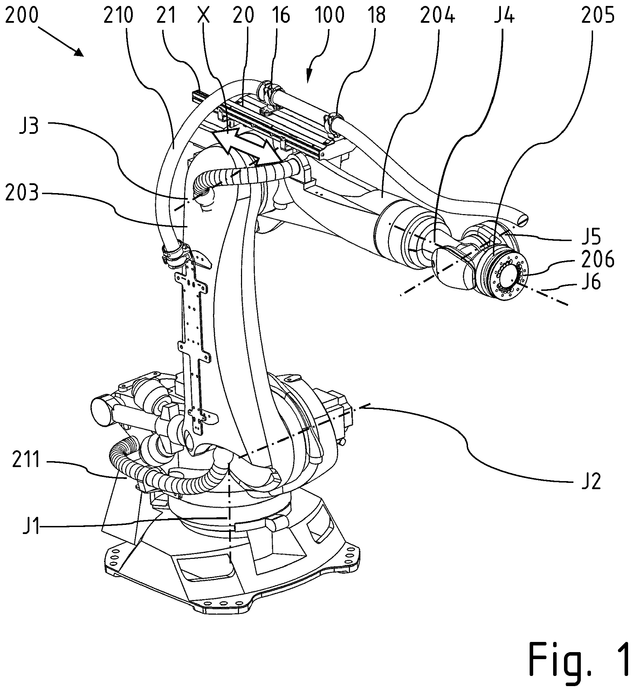

In Figur 1 ist ein Roboter 200 dargestellt, wobei es sich es sich in dem dargestellten Beispiel um einen Industrieroboter handelt, der als sechsachsiger Gelenkarmroboter ausgebildet ist. Er umfasst eine erste, vertikale Rotationsachse J1, eine horizontale Achse J2 und eine weitere horizontale Achse J3 zwischen einer Schwinge 203 und einem Arm 204. Der Übergang vom Arm 204 zu einer Roboterhand 205 erfolgt über eine Rotationsachse J4. An der Roboterhand 205 ist eine weitere Knickachse J5 vorgesehen, über die ein Roboterflansch 206 angebunden ist, der nochmal eine Rotationsachse 206 aufweist.

Am Roboterflansch 206 an der Roboterachse J6 kann ein Werkzeug wie ein Greifer, eine Stanznietzange oder eine Schweißzange angebracht werden. Zur Versorgung des Werkzeugs an der Roboterachse J6 mit Strom, Fluiden und/oder Datensignalen weist der Roboter 200 wenigstens ein Leitungspaket 210, 211 auf, das einen Schutzschlauch und mehrere darin geführte elektrische Leitungen und/oder Fluidleitungen umfasst.

Bei einer üblichen Bauweise eines Roboters 200 entsprechend Figur 1 ist ein erstes Leitungspaket 211 von einer ersten Roboterachse J1 zu der Schwinge 203 geführt. Es wird von dort über ein Stecker-Interface mit einem weiteren Leitungspaket 210 verbunden, welches von der Schwinge 203 über die Gelenkachse J3 und den Arm 204 zur Roboterachse J6 geführt und mit einem dort angebrachten Werkzeug verbunden ist. Das Leitungspaket 210, das sich von der Roboter-Schwinge 203 zur Roboterachse J6 erstreckt, wird als Verschleißelement gesehen und ist zu diesem Zweck als schnell tauschbare Einheit ausgebildet.

Bei einer entsprechenden Bewegung der Roboterachsen J4 bis J6 wird vom Roboter eine Zugbewegung auf das Leitungspaket 210 in Richtung der Roboterachse J6 ausgeübt, beispielsweise wenn die Roboterhand 205 nach unten abgeknickt wird. Sobald die Roboterachsen J4 bis J6 wieder in ihre Ausgangstellung zurückgebracht werden, muss das Leitungspaket 210 wieder von der Roboterachse J6 zurückgezogen werden. Das ist umso wichtiger, da eine zu große Länge des Leitungspaketes 210 im Bereich der Roboterachse J6 den Produktionsablauf des Roboters 200 sehr stören bzw. Kollisionen mit den durch den Roboter behandelten Produkten wie einer Fahrzeug-Karosserie oder einer Produktionsanlage verursachen kann.

Um das Leitungspaket 210 gestrafft zu halten, wird es von der Roboterachse J6 weggezogen. Hierfür ist eine Leitungsführungsvorrichtung 100 vorgesehen. Diese ist oberhalb der Roboterachse J3 auf dem Roboter befestigt.

Die Leitungsführungsvorrichtung 100 umfasst ein Gehäuse 20, das fest mit dem Roboter 200 verbunden ist. Sie besitzt eine Befestigungsschelle 16, die gegenüber dem Gehäuse 20 längsverschieblich gelagert ist. In ihr wird das Leitungspaket 10 in der durch den Blockpfeil markierten Längsrichtung formschlüssig festgehalten, sodass eine von der Leitungsführungsvorrichtung 100 auf die Befestigungsschelle 16 ausgeübte Rückstellkraft auf das Leitungspaket 210 übertragen werden kann.

Auf der anderen Seite des Gehäuses 20, die der Roboterachse J6 zugewandt ist, befindet sich eine Führungsschelle 18, in der das Leitungspaket 210 gleitend und längsverschieblich geführt wird. Eine weitere Befestigungsschelle ist in der Regel vorne am Roboter 200 fest mit der Roboterachse J6 verbunden.

Durch eine Rückzugseinrichtung in der Leitungsführungsvorrichtung 100 kann das Leitungspaket 210 zwischen der Befestigungsschelle an der Roboterachse J6 und der beweglichen Befestigungsschelle 16 gespannt gehalten werden, damit das Leitungspaket 210 keine unnötige Störkonturen zwischen den Roboterachsen J4 und J6 bilden kann.

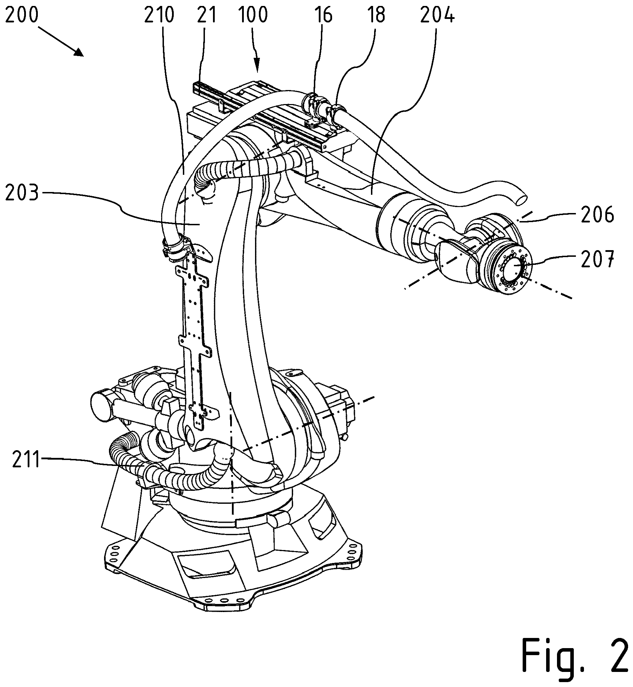

Während sich die Befestigungsschelle 16 in Figur 1 in der rückwärtigen Position befindet und das Leitungspakte 210 gestrafft ist, befindet sich die Befestigungsschelle 16 in Figur 2 in einer vorderen Position nahe bei der Führungsschelle 18.

Bei der in den Figuren 1 und 2 dargestellten bevorzugten Ausführungsform der Leitungsführungsvorrichtung 100 ist ein Längsträgerelement 21 mit einer Überlänge gegenüber den übrigen Teilen des Gehäuses 20 ausgeführt. Die Überlänge ist so gewählt, dass der Bogen des Leitungspaktes 210 stets vollständig abgestützt ist. Dadurch wird verhindert, dass sich das Leitungspaket 210 an einer rückwärtigen Gehäuseecke verhaken kann.

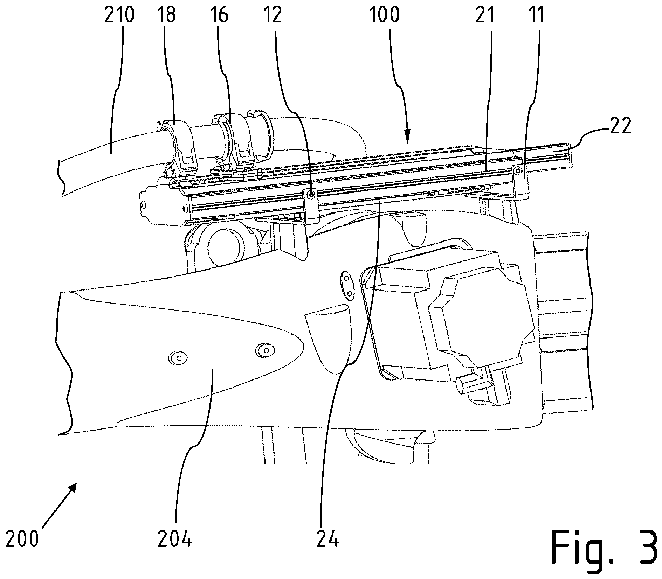

Figur 3 zeigt die Leitungsführungsvorrichtung 100 in der Stellung gemäß Figur 2 von der Rückseite des Roboters 200. Sie ist mit ihren Längsträgerelementen 21, 22 über Befestigungsbügelelemente 11, 12 am Arm 204 des Roboters 200 befestigt. Die Unterseite der Leitungsführungsvorrichtung 100 ist mit einer unteren Abdeckung 24 verschlossen.

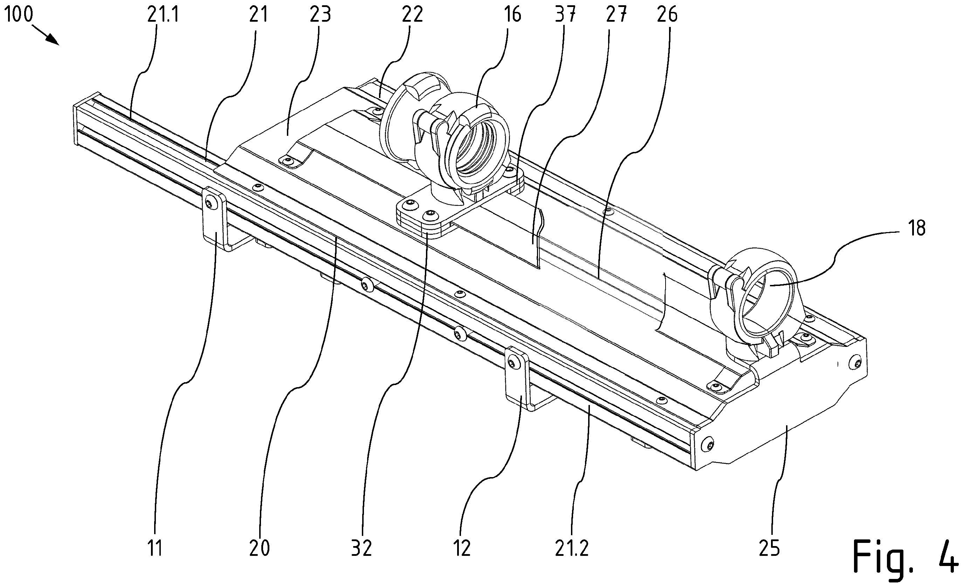

In Figur 4 ist die Leitungsführungsvorrichtung 100 mit geschlossenem Gehäuse 20 in perspektivischer Ansicht von schräg vorn gezeigt. Das Gehäuse 20 der Leitungsführungsvorrichtung 100 ist aus Längsträgerelementen 21, 22 gebildet, die insbesondere aus Abschnitten eines Aluminiumprofils bestehen. Die Aluminiumprofile weisen an allen vier Oberflächen jeweils eine hinterschnittene Verstellnut auf, in denen jeweils Nutmuttern geführt werden können. Auf diese Weise können die Befestigungsbügelelemente 11, 12 an unterschiedlichen Positionen der Längsträgerelementen 21, 22 befestigt werden, ohne dass einzelne Befestigungspunkte ausgebildet werden müssen.

Neben den unterschiedlich langen Längsträgern 20, 21 umfasst das Gehäuse 20 eine obere Abdeckung 23. In der oberen Abdeckung 23 befindet sich ein Schlitz 26, der sich in Längsrichtung der Leitungsführungsvorrichtung 100 erstreckt. Die Befestigungsschelle 16 ist auf einem Adapterelement 37 befestigt, das wiederum mit einem Schlittenbügel 32 verbunden ist. Das Bügelelement 32 kann sich im Bereich des länglichen Schlitzes 26 in der Abdeckung 23 vor- und zurückbewegen. Der Schlitz 26 liegt bei der dargestellten bevorzugten Ausführungsform nicht nach oben offen, sondern es ist eine Schutzabdeckung 27 vorgesehen, die nur an ihren Enden mit der Abdeckung 23 verbunden ist und einen Abstand dazu wahrt. Die Schutzabdeckung 27 ist in Figur 4 in dem Bereich zwischen den beiden Schellen 16, 18 mit einer Unterbrechung dargestellt, um die Lage des Schlitzes 26 zu zeigen. Der Schlittenbügel 32 umgreift die Schutzabdeckung 27 an beiden Seiten und taucht dann durch den Schlitz 26 hindurch ins Innere des Gehäuses 20 ab. Der Schlittenbügel 32 und das Adapterelement 37 sind so ausgebildet und miteinander verbunden, dass zwischen ihnen eine schmale Öffnung gebildet ist, durch die die streifenförmige und feststehende Schutzabdeckung 27 hindurch geführt ist.

An dem der Befestigungsschelle 16 gegenüberliegenden Ende der Leitungsführungsvorrichtung 100 ist die Führungsschelle 18 angeordnet, innerhalb der das Leitungspaket 210 gleitend geführt ist. In der Befestigungsschelle 16 dagegen ist das Leitungspaket 210 zumindest in axialer Richtung X fest installiert. In den beiden anderen Achsrichtungen Y und Z ist das Leitungspaket 210 drehbar angeordnet. Hierfür ist die Befestigungsschelle 16 mit einem Einsatz ausgerüstet, der eine axiale Verschiebung des Leitungspaketes 10 verhindert, aber eine Drehbewegung ermöglicht. Beide Schellen 16, 18 bestehen, wie aus der Figur 4 ersichtlich, jeweils aus einer feststehenden unteren Hälfte und einer dazu scharnierbar ausgeführten oberen Hälfte, die mittels einer Schraube mit der unteren Hälfte verbunden werden kann, so dass die Schellen 16, 18 einfach geschlossen und geöffnet werden können. Hierdurch ist ein einfaches Austauschen des Leitungspaketes 210 möglich.

Die Führungsschelle 18 ist an einem Traversenelement 25 befestigt, das die Längsträgerelemente 21, 22 miteinander verbindet und eine zur Roboterachse J6 weisende Vorderseite der Leitungsführungsvorrichtung 100 bildet.

Die Ausbildung der Längsträgerelemente 21, 22 in Form von Aluminium-Strangpressprofilen mit außenseitigen Verstellnuten 21.1, 21.2 erleichtert nicht nur die Befestigung des Deckelelements 23, sondern ermöglicht auch eine stufenlose Verstellung des Gehäuses 20 gegenüber den Befestigungsbügelelementen 11, 12, über welche die Leitungsführungsvorrichtung 100 an dem Roboter befestigt ist. Damit können die Position des Leitungspakets 210 und der Führungsschelle 18 am Roboter 200 stufenlos verändert werden.

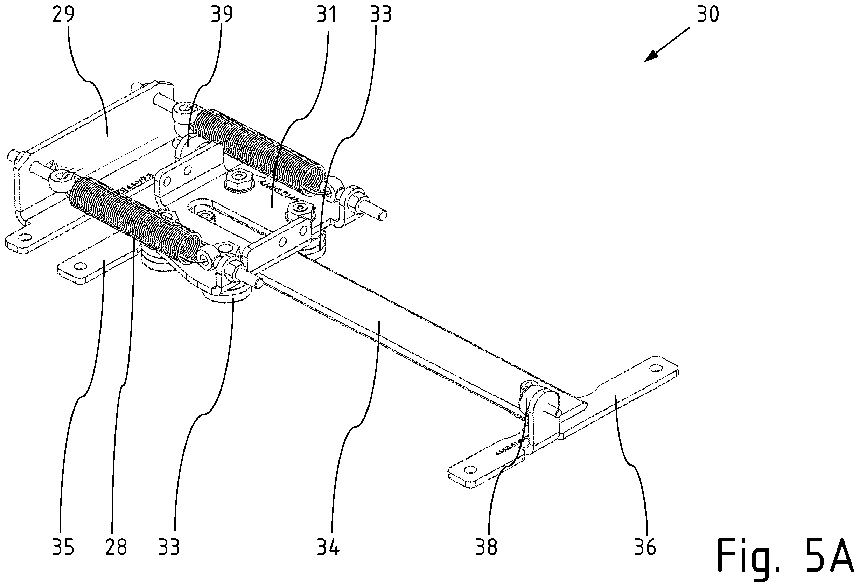

Die erfindungsgemäße Leitungsführungsvorrichtung 100 enthält eine Rückzugseinheit 30, die in Fig. 5A dargestellt ist. Sie umfasst in dem Ausführungsbeispiel wenigstens:
- einen Schlitten 31, der zwei Paar von kugelgelagerten Rollen 33 aufweist;
- eine Führungsschiene 34;
- zwei Rückzugselemente 28 und
- ein Widerlagerelement 29.

Der Weg des Schlittens 31 ist über Querlaschen 35, 36, die an beiden Enden der Führungsschiene 34 angebracht sind, und daran angebrachte Endlagenpufferelemente 38, 39 begrenzt.

Im Ausführungsbeispiel sind bei der Rückzugseinheit 30 zwei Spiralfedern als Rückzugselemente 28 vorgesehen. Die Rückzugselemente 28 sind jeweils an einem Ende mit dem Schlitten 31 und am anderen Ende mit dem Widerlagerelement 29 verbunden. Sie werden gespannt, wenn über das Leitungspaket eine Kraft auf die Befestigungsschelle 16 ausgeübt und dadurch der Schlitten 31 vorgezogen wird.

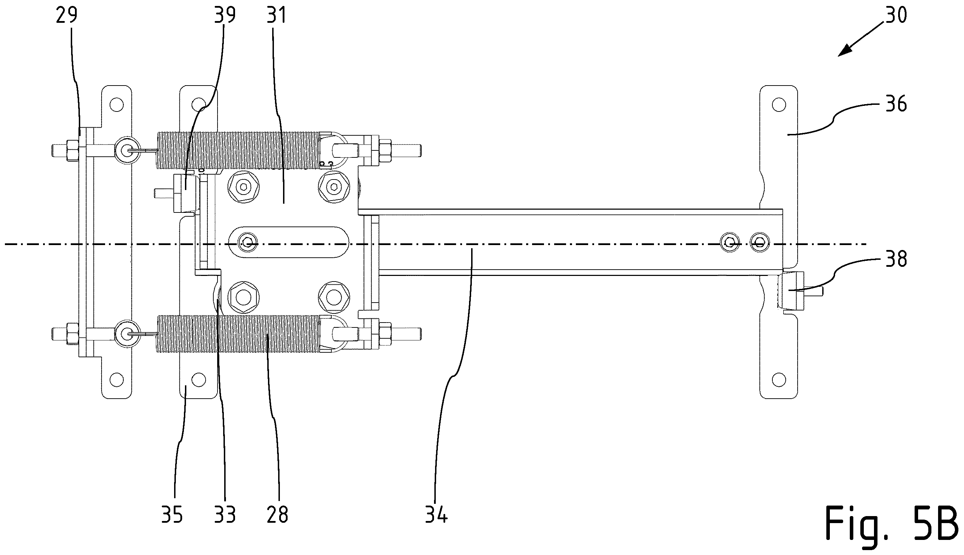

Wie die Draufsicht auf die Rückzugseinheit 30 in Figur 5B zeigt, befinden sich die Rückholfedern 28 jeweils spiegelbildlich zueinander bezüglich der axialen Mitte der Führungsschiene 34, sodass eine drehmomentfreie Rückzugskraftkraft auf den Schlitten 31 erzeugt wird.

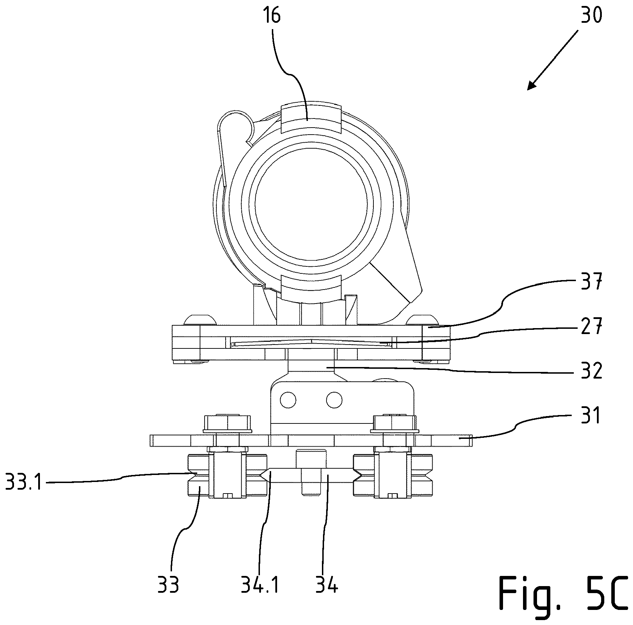

Figur 5C zeigt einen Schnitt durch die Rückzugseinheit 30. Die Rollen 33 sind an ihrem Außenumfang jeweils mit einer V-förmigen Einkerbung 33.1 versehen. Die Führungsschiene 34 besitzt an beiden Seitenkanten 34.1 eine dazu kompatible V-förmige Profilierung. Der Schlitten 31 wird also zwischen zwei Paaren von Rollen 33 an der Führungsschiene 34 geführt und ist über das Kantenprofil der Führungsschiene 34 und die Rillen in den Rollen 33 formschlüssig gegen Herausheben aus dem Gehäuse gesichert.

Weiterhin verdeutlicht Fig. 5C den Aufbau auf dem Schlitten 31. Am Schlitten 31 ist ein Schlittenbügel 32 angebracht. Dieser ist unten schmal, damit er durch den Schlitz 26 in der oberen Abdeckung 23 (siehe Fig. 4) hindurch tauchen kann. Nach oben verbreitert er sich stark, nämlich auf eine Breite, die größer ist als die Breite der streifenförmigen Schutzabdeckung 27. Das Adapterelement 37 ist genauso breit. Zwischen dem Adapterelement 37 und dem Schlittenbügel 32 ist durch Distanzelemente, Aufkantungen oder dergleichen ein schmaler Schlitz ausgebildet, durch den die feststehende Schutzabdeckung 27 hindurchgeführt ist. Der Schlitten 31 kann sich also ungehindert bewegen, und zugleich überdeckt die Schutzabdeckung 27 immer den Schlitz 26 in der oberen Abdeckung 23 des Gehäuses 20.

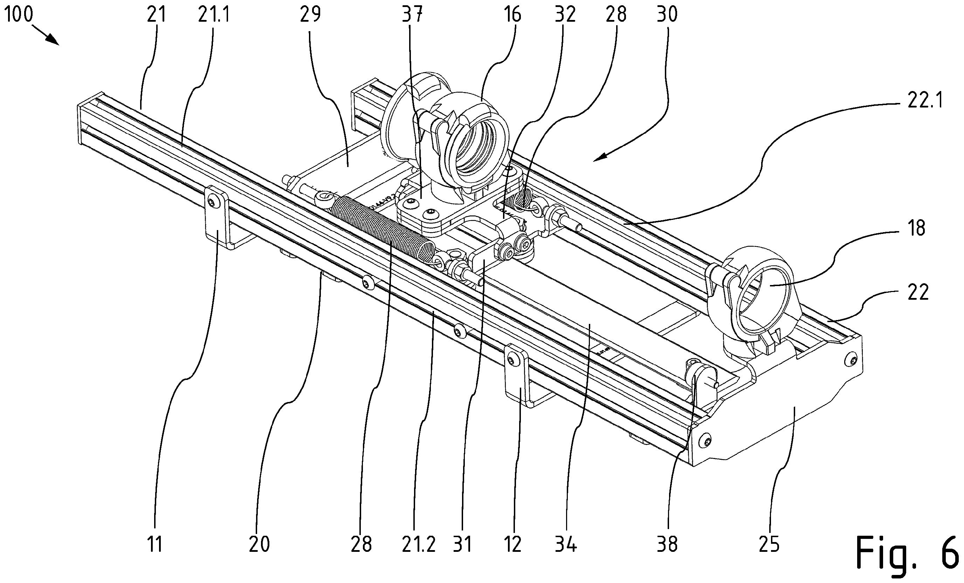

Figur 6 zeigt die Leitungsführungsvorrichtung 100 aus der gleichen Perspektive wie in Figur 4, jedoch mit abgenommenen Abdeckungen 23, 24. Im Inneren des Gehäuses ist die Rückzugseinheit 30 angeordnet, die die Verschiebung des Schlittens 31 entlang der Führungsschiene 34 ermöglicht, wenn eine Zugkraft in Längsrichtung auf das Leitungspaket 210 wirkt. Die Rückzugseinheit 30 führt das Leitungspaket 210 wieder zurück, wenn die externe Kraft auf das Leitungspaket 210 nachlässt.

Auf dem Schlitten 31 ist der Schlittenbügel 32 mit mehreren nebeneinander angeordneten Schrauben befestigt, so dass er nicht zur Seite wegkippen kann. Auf dem Bügel 32 mit dem Adapterelement 37 ist die Befestigungsschelle 16 für die Führung des Leitungspaketes 210 befestigt. Der Bügel 32 kann in verschiedenen Ausführungsformen ausgebildet werden, um mit mehreren Befestigungsschellen und/oder verschiedenen Schellenformen mehrere Leitungspakete oder Leitungspakete in verschiedenen Formen aufzunehmen.

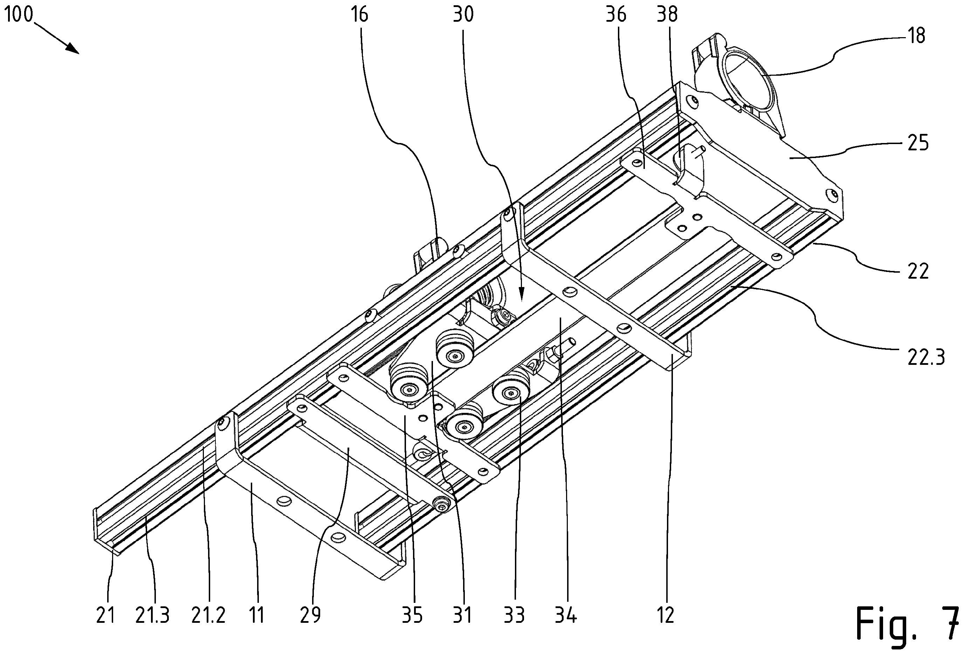

Figur 7 zeigt die Leitungsführungsvorrichtung 100 ohne die obere und untere Abdeckung von schräg unten. Die Führungsschiene 34, auf der der Schlitten 31 geführt ist, ist über die Querlaschen 35, 36 an den Verstellnuten 21.3, 22.3 an der jeweiligen Unterseite der beiden Längsträgerelemente 21, 22 befestigt. Damit ist die Rückzugseinheit 30 gegenüber den Längsträgerelementen 21, 22 verschiebbar. Dadurch kann die Längsposition der am Schlitten 31 geführten Befestigungsschelle 16 gegenüber den Längsträgerelementen 21, 22 und den Befestigungsbügelelementen 11, 12 und damit gegenüber dem Roboter 200 verändert werden.

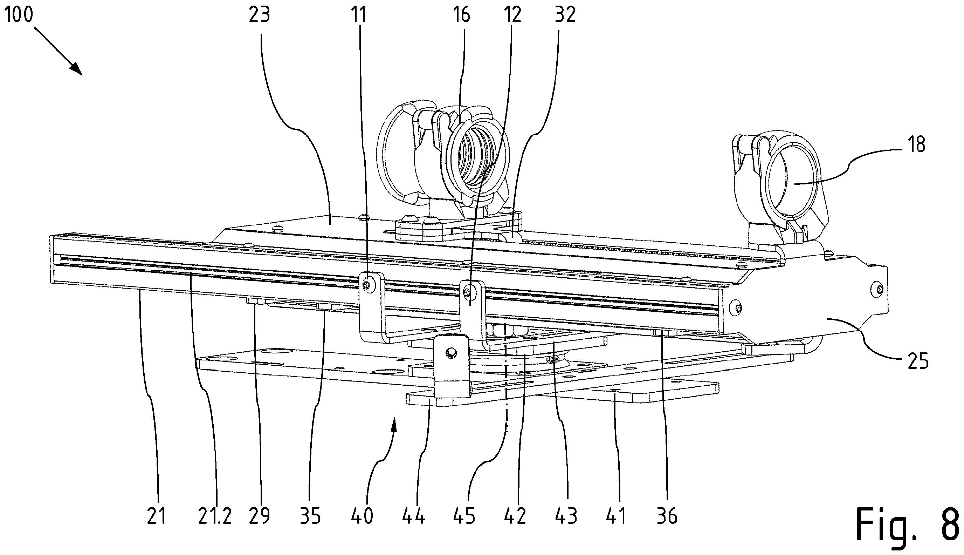

Bei der weiteren Ansicht auf die Leitungsführungsvorrichtung 100 in Figur 8 wird besonders deutlich, dass die im Querschnitt U-förmigen Befestigungsbügelelementen 11, 12 in den Verstellnuten 21.2 an den Seitenflächen der Längsträgerelemente 21 befestigt und geführt sind, während das Widerlagerelement 29 und die Traversenelemente 35, 36 in den Verstellnuten an den jeweiligen Unterseiten der Längsträgerelemente 21 befestigt und geführt sind. Die Befestigungsbügelelemente 11, 12 greifen also vollständig um die komplette Rückzugseinheit 30 samt den Querlaschen 35, 36 herum, so dass die Befestigungsbügelelemente 11, 12, das Widerlagerelement 29 und die Rückzugseinheit 30 unabhängig voneinander verschiebbar sind.

Die Befestigungsbügelelemente 11, 12 sind bei der Darstellung in Figur 8 nicht direkt, wie in den Figuren 1 bis 3 gezeigt, mit dem Arm eines Roboters 200, sondern sie sind mit einem Zwischenbasiselement 43 einer Basiseinheit 40 verbunden, die eine Verschwenkung der Leitungsführungsvorrichtung 100 in Bezug auf eine Achse 45 ermöglicht. Die Basiseinheit 40 besitzt eine Grundplatte 41, die am Roboter befestigt wird. Ein Schwenklager 42 ermöglich, dass sich das Zwischenbasiselement 43 gegenüber der Grundplatte 41 verschwenken lässt. Der Schwenkwinkel wird durch ein einstellbares Schwenkwinkelbegrenzungselement 44 begrenzt.

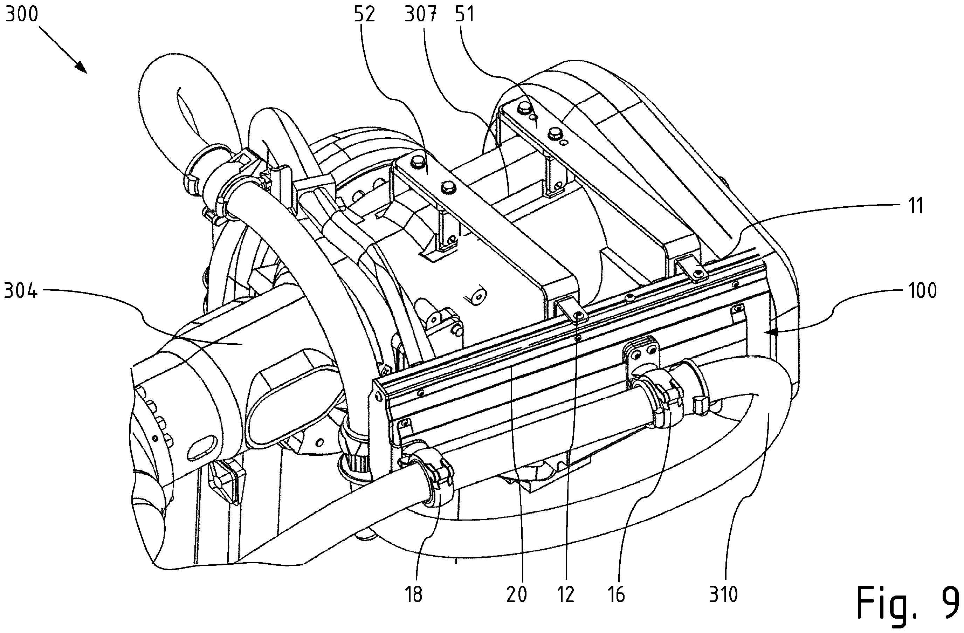

Figur 9 zeigt eine seitliche Anbringung einer Leitungsführungsvorrichtung 100 an einem anderen Roboter 300, bei dem die Zuführung eines Leitungspakets 310 von der rückwärtigen Seite eines Roboterarms 304 vorgesehen ist. Die Leitungsführungsvorrichtung 100 selbst ist hierfür nicht anders ausgebildet als bei den zuvor beschrieben Positionierungen auf der Oberseite eines Roboters. Es sind aber zwei zusätzliche Befestigungswinkelelemente 51, 52 vorgesehen, die an einem Ende mit einer festen Aufnahme 307 am Roboter 300 verbunden sind. Am anderen Ende sind die Befestigungsbügelelemente 11, 12 mit den Befestigungswinkelelementen 51, 52 verbunden.

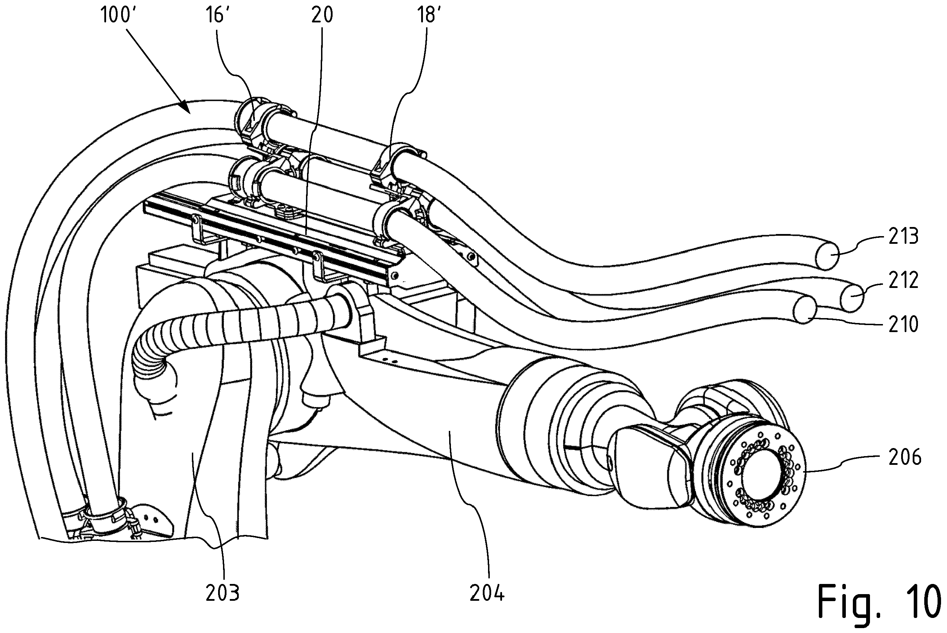

Figur 10 zeigt den oberen Abschnitt des Roboters 200, der auch schon in den Figuren 1 bis 3 dargestellt worden ist. Eine zweite Ausführungsform einer Leitungsführungsvorrichtung 100' ist hieran montiert, und zwar in gleicher Weise an der Oberseite des Roboterarms 204 wie in den Figuren 1 bis 3 auch. Der innere Aufbau der Leitungsführungsvorrichtung 100' entspricht ebenfalls der ersten Ausführungsform. Unterschiedlich ist, dass die Leitungsführungsvorrichtung 100' einen Befestigungsschellensatz 16' mit drei Befestigungsschellen und einen Führungsschellensatz 18' mit drei Führungsschellen aufweist, so dass mittels der Leitungsführungsvorrichtung 100' drei Leitungspakete 210, 212, 213 zugleich geführt und gestrafft werden können.

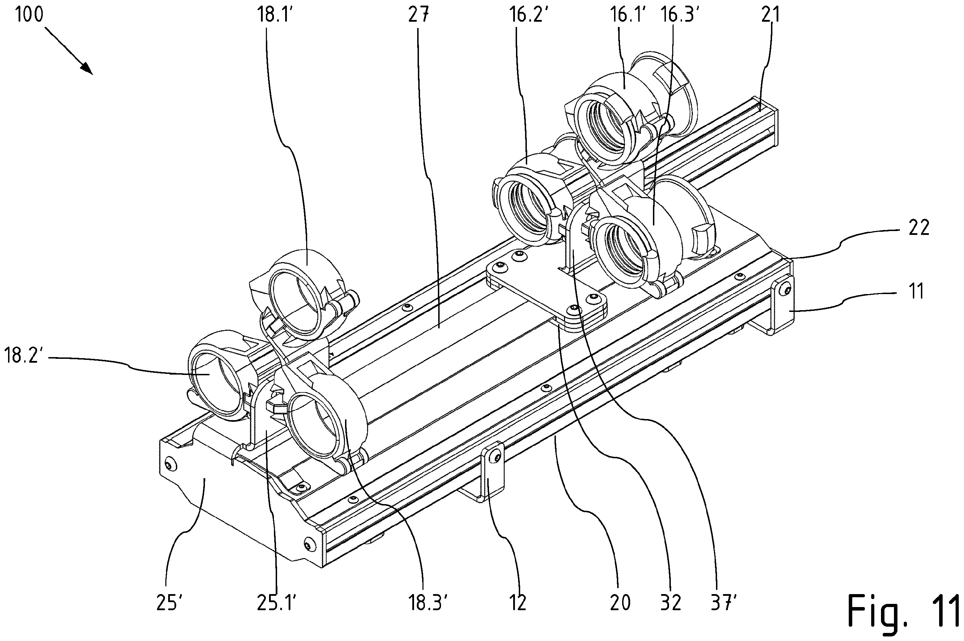

In Figur 11 ist die Leitungsführungsvorrichtung 100' allein in perspektivischer Ansicht gezeigt. Am Gehäuse 20 sind bei den Längsträgerelementen 21, 22, der oberen Abdeckung 23 und der Schutzabdeckung 27 keine Änderungen vorgenommen worden.

Um den Führungsschellensatz 18' mit drei Führungsschellen 18.1', 18.2' und 18.3' am Gehäuse 20 befestigen zu können, setzt sich das Traversenelement 25' In Form eines Haltebügels '25.1' fort, an dem die Führungsschellen 18.1', 18.2' und 18.3' angebracht sind.

Um den Befestigungsschellensatz 16' mit drei Befestigungsschellen 16.1', 16.2' und 16.3' am Gehäuse 20 befestigen zu können, ist der Schlittenbügel 32 mit einem geänderten Adapterelement 37' verbunden, an dem die Befestigungsschellen 16.1', 16.2' und 16.3' angebracht sind. Alle Befestigungsschellen 16.1', 16.2', 16.3 sind also auf demselben Schlittengelagert und werden über eine gemeinsame Rückzugseinrichtung zurückgezogen, nachdem sie zuvor ausgelenkt worden sind.

## Patentansprüche

1. Leitungsführungsvorrichtung (100; 100') zur Führung wenigstens eines Leitungspakets (210, 211, 212, 213; 310) und/oder einer Leitung an einem Roboter (200; 300),
mit wenigstens:
- einem Gehäuse (20);
- einer Befestigungsschelle (16; 16.1', 16.2', 16.3'), an der das Leitungspaket (210, 211, 212, 213; 310) in einer Längsrichtung X festgelegt ist;
- einer Führungsschelle (18; 18.1', 18.2', 18.3'), innerhalb der das Leitungspaket (210, 211, 212, 213; 310) gleitend geführt ist,
- einer Rückzugseinrichtung (30) zur Ausübung einer Rückzugskraft auf einen durch die Führungsschelle (18; 18.1', 18.2', 18.3') hindurchgeführten Abschnitt des Leitungspakets (210, 211, 212, 213; 310), wobei die Rückzugseinrichtung (30) wenigstens umfasst:
- einen Schlitten (31), der auf einer Führungsschiene (34) verschiebbar gelagert ist und der mit der Befestigungsschelle (16; 16.1', 16.2', 16.3') verbunden ist,
- ein elastisches Rückzugselement (28), das zwischen dem beweglichen Schlitten (31) und dem Gehäuse (20) spannbar ist,
**dadurch gekennzeichnet,**
- **dass** das Gehäuse (20) wenigstens zwei Längsträgerelemente (21, 22) umfasst, die sich parallel zur Linearführung (32) erstrecken und die jeweils wenigstens eine, sich in Längsrichtung X erstreckende Verstellnut (21.1 21.2, 21.3, 22.3) aufweisen,
- **dass** die Rückzugseinrichtung (30) über Befestigungselemente, die jeweils in einer der Verstellnuten (21.1 21.2, 21.3, 22.3) geführt sind, mit den Längsträgerelementen (21, 22) verbunden ist.

2. Leitungsführungsvorrichtung (100; 100') nach Anspruch 1, **dadurch gekennzeichnet, dass** die Rückzugseinrichtung (30) wenigstens zwei Querlaschen (35, 36) aufweist, die jeweils mit einem Endbereich der Linearführung (34) verbunden sind und die sich zwischen den Längsträgerelementen (21, 22) erstrecken.

3. Leitungsführungsvorrichtung (100; 100') nach Anspruch 1 oder 2, **dadurch gekennzeichnet, dass** das wenigstens eine elastische Rückzugselement (28) an einem Widerlagerelement (29) befestigt ist, das sich zwischen den Längsträgerelementen (21, 22) erstreckt.

4. Leitungsführungsvorrichtung (100; 100') nach Anspruch 3, **dadurch gekennzeichnet, dass** das Widerlagerelement (29) beidseitig über Befestigungselemente, die jeweils in einer der Verstellnuten (21.1 21.2, 21.3, 22.3) verschiebbar aufgenommen sind, mit den Längsträgerelementen (21, 22) verbunden ist.

5. Leitungsführungsvorrichtung (100; 100') nach einem der vorhergehenden Ansprüche, **dadurch gekennzeichnet, dass** die Position des Widerlagerelements (29) relativ zu der Linearführung (34) der Rückzugseinrichtung (30) durch Verschiebung in den Verstellnuten (21.1 21.2, 21.3, 22.3) veränderbar ist.

6. Leitungsführungsvorrichtung (100; 100') nach einem der vorhergehenden Ansprüche, **gekennzeichnet durch** wenigstens zwei Befestigungsbügelelemente (11, 12) zur Befestigung der Leitungsführungsvorrichtung (100; 100') an dem Roboter (200; 300), wobei die Befestigungsbügelelemente (11, 12) längsverschiebbar in den Verstellnuten (21.1 21.2, 21.3, 22.3) der Längsträgerelemente (21, 22) befestigt sind.

7. Leitungsführungsvorrichtung (100; 100') nach Anspruch 6, **dadurch gekennzeichnet, dass** die Befestigungsbügelelemente (11, 12) relativ zu dem Widerlagerelement (29) und / oder zu der Linearführung (34) der Rückzugseinrichtung (30) verschiebbar sind.

8. Leitungsführungsvorrichtung (100; 100') nach Anspruch 7, **dadurch gekennzeichnet, dass** die Befestigungsbügelelemente (11, 12) im Querschnitt U-förmig ausgebildet sind und um das Widerlagerelement (29) und die Querlaschen (35, 36) der Rückzugseinrichtung (30) herumgreifen.

9. Leitungsführungsvorrichtung (100; 100') nach einem der vorhergehenden Ansprüche, **dadurch gekennzeichnet, dass** der Schlitten (31) mit kugelgelagerten Rollen (33) versehen ist, die an ihrem Außenumfang jeweils wenigstens eine umlaufende Rille (33.1) aufweisen, und dass die Führungsschiene (34) an ihren beiden sich in Längsrichtung erstreckenden Außenkanten (34.1) komplementär zur Querschnittsform der Rillen (33.1) profiliert ist.

10. Leitungsführungsvorrichtung (100; 100') nach Anspruch 9, **dadurch gekennzeichnet, dass** die Außenkanten (34.1) und die Rillen (33.1) jeweils V-förmig profiliert sind.

11. Leitungsführungsvorrichtung (100; 100') nach einem der vorhergehenden Ansprüche, **dadurch gekennzeichnet, dass** am Schlitten (31) ein austauschbarer Schlittenbügel (32) angebracht ist, der die wenigstens eine Befestigungsschelle (16; 16.1', 16.2', 16.3') trägt.

12. Leitungsführungsvorrichtung (100; 100') nach einem der vorhergehenden Ansprüche, **dadurch gekennzeichnet, dass** das Gehäuse (20) eine die Längsträger (21, 22) verbindende obere Abdeckung (23) umfasst, die einen längsförmigen Schlitz (26) aufweist, durch welchen sich der Schlittenbügel (32) erstreckt.

13. Leitungsführungsvorrichtung (100; 100') nach Anspruch 12, **dadurch gekennzeichnet,**
- **dass** oberhalb des Schlitzes (26) eine Schutzabdeckung (27) angeordnet ist;
- **dass** der Schlittenbügel (32) durch ein Adapterelement (37; 37') ergänzt ist, das die Befestigungsschelle (16; 16.1', 16.2', 16.3') trägt, wobei das Bügelelement (32) und das Adapterelement (37; 37) derart ausgebildet und miteinander verbunden sind, dass zwischen ihnen eine schlitzförmige Ausnehmung gebildet ist, durch welche die Schutzabdeckung (27) hindurch geführt ist.

14. Leitungsführungsvorrichtung (100; 100') nach einem der vorhergehenden Ansprüche, **dadurch gekennzeichnet, dass** der Schlitten (31) einen Befestigungsschellensatz (16') trägt, der mehrere Befestigungsschellen (16; 16.1', 16.2', 16.3') umfasst und dass mehrere Führungsschellen (18; 18.1', 18.2', 18.3') zu einem Führungsschellensatz (18') verbunden sind, der mit dem Gehäuse (20) verbunden ist.

15. Roboter (200; 300) mit wenigstens einem Leitungspaket (210) und mit wenigstens einer Leitungsführungsvorrichtung (100; 100') nach einem der vorhergehenden Ansprüche.
